(19) Europäisches Patentamt
European Patent Office
Office européen des brevets

(11) **EP 3 513 858 B1**

(12) **FASCICULE DE BREVET EUROPEEN**

(45) Date de publication et mention
de la délivrance du brevet:
**28.06.2023 Bulletin 2023/26**

(21) Numéro de dépôt: **19305063.0**

(22) Date de dépôt: **17.01.2019**

(51) Classification Internationale des Brevets (IPC):
***B01D 35/157*** *(2006.01)* ***B01D 29/21*** *(2006.01)*
***B01D 29/52*** *(2006.01)* ***B01D 29/54*** *(2006.01)*

(52) Classification Coopérative des Brevets (CPC):
**B01D 29/52; B01D 29/21; B01D 29/54;**
**B01D 35/157**

(54) **DISPOSITIF, SYSTÈME DE FILTRATION ET PROCÉDÉ DE SURVEILLANCE DE COLMATAGE**

VORRICHTUNG, FILTERSYSTEM UND ÜBERWACHUNGSVERFAHREN VON ABDICHTUNGEN

DEVICE, FILTERING SYSTEM AND METHOD FOR MONITORING CLOGGING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.01.2018 FR 1850384**

(43) Date de publication de la demande:
**24.07.2019 Bulletin 2019/30**

(73) Titulaire: **Safran Filtration Systems**
**87800 Nexon (FR)**

(72) Inventeurs:
• **MARTIN, Jérôme**
**87800 NEXON (FR)**
• **PINON, Raluca-Liliana**
**87800 NEXON (FR)**
• **MASSONNAUD, Adrien**
**87800 NEXON (FR)**

(74) Mandataire: **Regimbeau**
**20, rue de Chazelles**
**75847 Paris Cedex 17 (FR)**

(56) Documents cités:
EP-A1- 2 638 946    WO-A1-02/07856
WO-A1-2016/010973   FR-A1- 2 975 015
US-A- 4 422 790     US-A1- 2003 106 847

## Description

DOMAINE DE L'INVENTION

L'invention concerne un dispositif et un système de filtration à particules. De plus, l'invention concerne un procédé de surveillance de l'état de colmatage d'un dispositif de filtration à particules.

ARRIERE-PLAN TECHNOLOGIQUE

Il est connu de filtrer un fluide au moyen d'un dispositif de filtration à particules.

A cet effet, le dispositif de filtration comprend généralement une cartouche de filtration comprenant une ou plusieurs zones de filtration formées par un ou plusieurs média(s) présentant une structure poreuse permettant de retenir les particules présentes dans ledit fluide.

Au cours du temps, la ou les zone(s) de filtration du dispositif finissent par se colmater. Il faut alors nettoyer ces zones de filtration, ou les remplacer.

Par ailleurs, afin de pouvoir procéder aux opérations de maintenance, il peut être nécessaire de connaître l'évolution de l'état de colmatage du dispositif de filtration.

Lorsqu'un dispositif de filtration à particules se colmate, la différence des pressions totales entre l'amont et l'aval $\Delta P$ du dispositif de filtration augmente au fur et à mesure du colmatage.

En mesurant cette différence de pression, ou un paramètre qui lui est corrélé, comme un écart de pressions statiques, éventuellement corrigées, de la pression dynamique, il est possible d'obtenir une estimation de l'état de colmatage du dispositif de filtration. US 4 422 790 A et FR 2 975 015 A1 divulguent des systèmes de surveillance de colmatage exemplaires.

Le cas échéant, il est connu de post-traiter la mesure de différence de pressions pour prendre en compte les effets du débit et de la température du fluide, qui influent sur les propriétés du fluide, et donc sur la différence de pression. Des modèles de colmatage permettent alors d'estimer le niveau de colmatage du dispositif de filtration dans des conditions de référence.

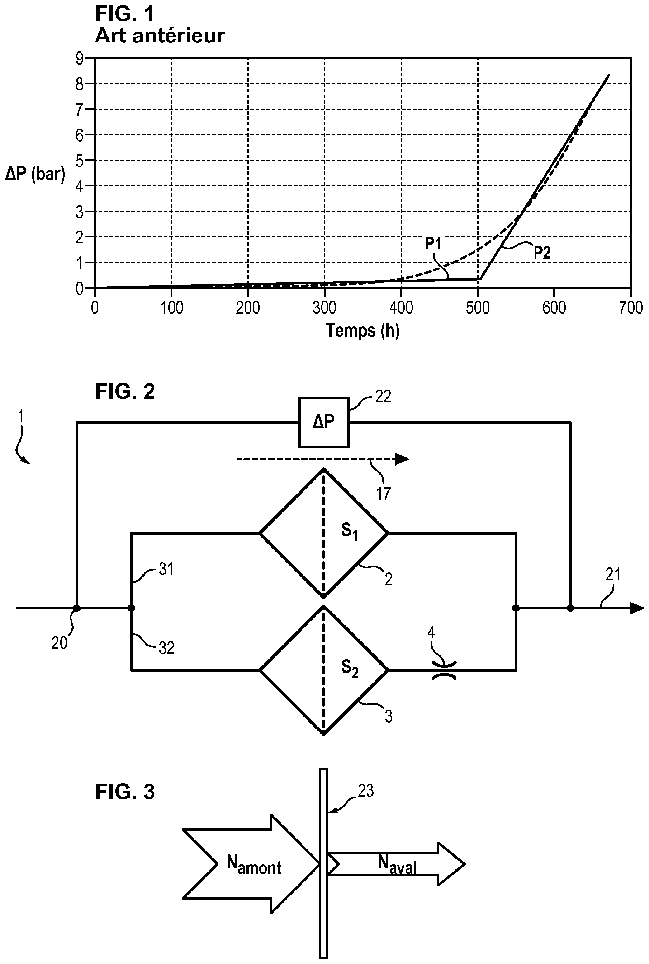

On a représenté en Figure 1 un exemple d'évolution temporelle de cette différence de pression pour un dispositif de filtration à particules classique, avec des hypothèses de débit, de température et de concentration en particules constants.

Comme illustré sur la Figure 1, la courbe comprend principalement deux phases de colmatage (P1 et P2).

Dans la première phase de colmatage P1, l'accroissement de la différence de pression $\Delta P$ est faible. Dans la deuxième phase de colmatage P2, l'accroissement de la différence de pression $\Delta P$ devient subitement très rapide.

Du fait de cette évolution caractéristique, il s'avère donc que la prédiction du niveau de colmatage est rendue très difficile dans la première phase. Il apparaît en effet qu'il existe peu de sensibilité de la mesure de la différence de pression $\Delta P$ vis-à-vis de l'état de colmatage, mais aussi que, dans certains cas, le niveau de différence de pression $\Delta P$ peut être trop faible par rapport au bruit des instruments de mesure. Dans la deuxième phase, l'accroissement rapide de la différence de pression $\Delta P$ réduit fortement le temps de réaction possible, notamment pour le déclenchement d'une opération de maintenance, en vue d'un remplacement de la cartouche de filtration.

On connaît des dispositifs incluant une cartouche qui comprend plusieurs zones de filtrations fonctionnant en parallèle, les zones de filtration présentant des efficacités de filtration différentes l'une de l'autre, comme par exemple décrits dans US 2003/106847 A1, WO 02/07856 A1, WO 2016/010973 A1 et US 4 422 790 A. Cette caractéristique permet d'augmenter la durée de vie du dispositif. En effet, une première zone de filtration très efficace se colmate rapidement, tandis qu'une deuxième zone de filtration, moins efficace que la première zone de filtration, se colmate plus lentement. Une fois la première zone de filtration colmatée, le dispositif peut encore fonctionner grâce à la deuxième zone de filtration. Cependant, une fois la première zone de filtration colmatée, le dispositif de filtration fonctionne avec une efficacité dégradée. De tels dispositifs ne sont donc pas adaptés pour être utilisés dans des applications qui nécessitent de garantir une efficacité de filtration constante pendant toute la durée de vie du dispositif.

D'autres dispositifs sont également connus incluant une cartouche qui comprend plusieurs zones de filtration présentant des efficacités de filtration identiques. Ces dispositifs comprennent généralement un clapet permettant de diriger le flux de fluide sélectivement à travers la première zone de filtration ou à travers la deuxième zone de filtration. De cette manière, le fluide est initialement dirigé uniquement vers la première zone de filtration jusqu'à ce que celle-ci soit colmatée. Une fois la première zone de filtration colmatée, le clapet est actionné afin de diriger le fluide uniquement vers la deuxième zone de filtration, qui prend ainsi le relai de la première zone de filtration. Un tel dispositif permet de maintenir une efficacité de filtration sensiblement constante. Cependant, il ne permet pas de surveiller de manière précise l'état de colmatage du dispositif. En effet, il est difficile d'anticiper le colmatage de la deuxième zone de filtration pour les raisons qui ont été exposées précédemment en relation avec la figure 1.

La détection du colmatage du dispositif de filtration n'est donc pas optimale. Il existe donc un besoin pour un dispositif de filtration dont le colmatage peut être plus facilement anticipé, tout en assurant la même qualité de filtration tout au long du fonctionnement du dispositif de filtration.

RESUME DE L'INVENTION

Un but de l'invention est donc de rendre plus fiable la détection de l'état de colmatage d'un dispositif de filtration, afin notamment de faciliter les opérations de maintenance du dispositif.

Selon un premier aspect l'invention propose un système de filtration pour la filtration d'un fluide, comprenant un dispositif de filtration (1) selon la revendication 18, comprenant :

- une entrée de fluide,
- une sortie de fluide,
- un premier circuit d'écoulement de fluide reliant l'entrée de fluide à la sortie de fluide et comprenant une première zone de filtration présentant une première surface de filtration et une première efficacité de filtration pour une taille de particule donnée, et

- un deuxième circuit d'écoulement de fluide reliant l'entrée de fluide à la sortie de fluide, et comprenant :

  o une deuxième zone de filtration présentant une deuxième surface de filtration et une deuxième efficacité de filtration, identique à la première efficacité de filtration, pour la taille de particule donnée, et
  o une restriction présentant une résistance hydraulique constante, de sorte qu'en fonctionnement, une première partie du fluide s'écoule par le premier circuit d'écoulement en passant à travers la première zone de filtration et une deuxième partie du fluide s'écoule par le deuxième circuit d'écoulement en passant à travers la deuxième zone de filtration et la restriction, et la première zone de filtration atteint un état de colmatage prédéterminé avant la deuxième zone de filtration.

Dans un tel dispositif de filtration, la présence de la restriction dans le deuxième circuit a pour effet d'orienter initialement le flux de fluide majoritairement à travers le premier circuit. Cela a pour effet que la première zone de filtration se colmate plus rapidement que la deuxième zone de filtration, alors même que ces deux zones de filtration présentent des efficacités de filtration identiques. De ce fait, la différence de pression entre l'entrée de fluide et la sortie de fluide augmente plus rapidement et est plus facilement détectable que dans un dispositif de filtration classique, ce qui permet de mieux anticiper les opérations de maintenance. En outre, à mesure que le niveau de colmatage de la première zone de filtration augmente, le flux de fluide s'oriente préférentiellement vers le deuxième circuit. Ainsi, la deuxième zone de filtration prend progressivement le relai sur la première zone de filtration, ce qui permet d'assurer une qualité de filtration constante au cours du fonctionnement, et similaire à celle des dispositifs de filtration de l'art antérieur.

Avantageusement, mais facultativement, le dispositif de filtration peut comprendre les caractéristiques suivantes, prises seules ou en une quelconque de leur combinaison techniquement possible :

- il comprend une cartouche filtrante remplaçable comprenant la première zone de filtration et la deuxième zone de filtration, et un carter propre à contenir la cartouche filtrante et délimitant avec la cartouche filtrante le premier circuit d'écoulement de fluide et le deuxième circuit d'écoulement de fluide,
- le carter comprend la restriction,
- le carter comprend une extension entourant la cartouche filtrante, l'extension comprenant une ou plusieurs perforation(s) formant la restriction,
- il comprend un canal central de circulation de fluide entouré par la première zone de filtration et par la deuxième zone de filtration, et le carter comprend une extension s'étendant à l'intérieur du canal central de circulation de fluide, l'extension comprenant une ou plusieurs perforation(s) formant la restriction,
- un rapport un entre une aire d'une section de la perforation ou une somme des aires des sections des perforations, et une aire totale d'une face de l'extension, est inférieur à 50%, de préférence inférieur à 25%,
- dans le dispositif de filtration :

  o la première zone de filtration comprend un premier média de filtration,
  o la deuxième zone de filtration comprend un deuxième média de filtration,

  le dispositif de filtration comprenant en outre un flasque intermédiaire disposé entre le premier média de filtration et le deuxième média de filtration, le flasque intermédiaire comprenant :

    ▪ une première face présentant une première zone en contact avec le premier média de filtration,
    ▪ une deuxième face, opposée à la première face, et présentant une deuxième zone, en contact avec le deuxième média de filtration,
    l'une de la première face ou de la deuxième face présentant une troisième zone qui n'est ni en contact avec le premier média de filtration, ni en contact avec le deuxième média de filtration,
    ▪ une ou plusieurs perforation(s) formant la restriction,

  et un rapport entre une aire d'une section de la perforation ou une somme des aires des sections des perforations, et une aire de la troisième zone, est inférieur à 50%, de préférence inférieur à 25%

- le carter comprend une paroi latérale entourant la cartouche filtrante, la paroi latérale présentant une forme générale de révolution, par exemple cylindrique de révolution ou conique de révolution,

- le carter comprend une tête de carter propre à être assemblée avec la cartouche filtrante et présentant des buses de raccordement pour raccorder l'entrée de fluide et la sortie de fluide à des conduites de circulation du fluide,
- il comprend un flasque supérieur, un flasque inférieur, un canal central de circulation de fluide, un premier média de filtration entourant le canal central et un deuxième média de filtration entourant le canal central de circulation de fluide, le premier média de filtration et le deuxième média de filtration formant respectivement la première zone de filtration et la deuxième zone de filtration,
- la ou les perforation(s) sont situées à l'extérieur du canal central de circulation de fluide,
- la ou les perforation(s) sont situées à l'intérieur du canal central de circulation de fluide,
- la restriction est disposée en aval de la deuxième zone de filtration dans le sens de l'écoulement du fluide dans le deuxième circuit d'écoulement de fluide,
- la restriction est disposée en amont de la deuxième zone de filtration dans le sens de l'écoulement du fluide dans le deuxième circuit d'écoulement de fluide,
- un rapport entre la première surface de filtration et la somme des première et deuxième surfaces de filtration est compris entre 0,3 et 0,7, de préférence entre 0,4 et 0,6 , par exemple 0,5,
- il comprend

  o une première cartouche filtrante remplaçable comprenant la première zone de filtration,
  o une deuxième cartouche filtrante remplaçable comprenant la deuxième zone de filtration, et
  o un second canal de raccordement reliant la première cartouche filtrante et la deuxième cartouche filtrante, le second canal de raccordement formant la restriction, et

- les efficacités de filtration sont comprises entre 95% et 100%, de préférence comprises entre 98% et 99,9%, par exemple 99,5%, pour la taille de particule donnée,
- la taille de particule donnée est comprise entre 2 et 25 microns, et
- la taille de particule donnée est comprise entre 8 et 50 microns.

L'invention concerne également un procédé de surveillance de l'état de colmatage d'un dispositif de filtration, selon la revendication 1, tel que défini précédemment,

comprenant les étapes consistant à :

- mesurer une différence de pression entre l'entrée de fluide et la sortie de fluide,
- mesurer une température du fluide et un débit de fluide à l'entrée de fluide,
- déterminer un état de colmatage à partir de la différence de pression, de la température du fluide et du débit de fluide mesurés, et d'une courbe caractéristique de référence définissant un état de colmatage en fonction de la différence de pression.

Le procédé peut en outre comprendre une étape consistant à déterminer la courbe caractéristique en soumettant un dispositif de filtration de référence à une circulation d'un fluide contenant des particules avec une composition, des caractéristiques, et un taux de concentration prédéterminés, à une température et à un débit prédéterminés, et en mesurant une évolution de la différence de pression entre l'entrée de fluide et la sortie de fluide au cours du temps.

Le système de filtration pour la filtration d'un fluide, comprenant un dispositif de filtration tel que défini précédemment, comprend en outre un module de surveillance de l'état de colmatage du dispositif de filtration, le module de surveillance étant configuré pour recevoir des signaux représentatifs d'une différence de pression entre l'entrée de fluide et la sortie de fluide, de la température et du débit de fluide à l'entrée de fluide, et pour déterminer un état de colmatage du dispositif de filtration en fonction de la différence de pression entre l'entrée de fluide et la sortie de fluide, de la température et du débit de fluide à l'entrée de fluide.

L'invention présente de nombreux avantages.

L'invention propose une solution assurant une détection et une prédiction fiables et robustes de l'état de colmatage d'un dispositif de filtration.

De plus, l'invention propose une solution flexible, permettant d'ajuster, dès la conception du dispositif de filtration, l'évolution temporelle de la perte de pression à travers le dispositif de filtration.

La solution proposée induit peu de pertes de charge vis-à-vis de dispositifs de filtration classiques présentant une surface de filtration totale équivalente, ce qui signifie que les performances du dispositif de filtration sont maintenues quasiment à l'identique.

Enfin, la solution est peu coûteuse et s'adapte facilement aux systèmes de filtration existants.

DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

- la Figure 1, déjà commentée, représente une courbe de perte de pression en fonction du temps, pour un dispositif de filtration de l'art antérieur ;
- la Figure 2 est une représentation schématique d'un dispositif de filtration conforme à un mode de réalisation de l'invention ;
- la Figure 3 illustre schématiquement la notion de rapport de filtration ;
- les Figures 4a à 4d représentent des exemples de dispositif de filtration à particules comprenant une unique cartouche filtrante remplaçable et un carter propre à recevoir la cartouche filtrante ;
- la Figure 5 représente un mode réalisation d'un dispositif de filtration comprenant une restriction sous la forme d'un canal à section réduite ;
- la Figure 6 représente un exemple de courbes de colmatage, obtenues pour un dispositif de filtration de l'art antérieur et pour un exemple de dispositif de filtration selon l'invention ;
- la Figure 7 représente diverses courbes de pertes de pression en fonction du temps obtenues par simulation pour différents rapports entre la première surface de filtration et la somme des première et deuxième surfaces de filtration, dans des conditions de fonctionnement identiques

DESCRIPTION DETAILLEE

### Dispositifs de filtration à particules

On a représenté en Figure 2 un mode de réalisation d'un dispositif de filtration 1 à particules pour la filtration d'un fluide. Le fluide est typiquement un liquide utilisé dans les circuits aéronautiques, par exemple dans les circuits de carburant, de l'huile de lubrification, ou de l'huile de commande hydraulique.

Le dispositif de filtration 1 comprend une entrée de fluide 20, une sortie de fluide 21, un premier circuit d'écoulement de fluide 31 reliant l'entrée de fluide 20 à la sortie de fluide 21 et un deuxième circuit d'écoulement de fluide 32 reliant l'entrée de fluide 20 à la sortie de fluide 21. En outre le premier circuit d'écoulement de fluide 31 comprend une première zone de filtration 2, et le deuxième circuit d'écoulement de fluide 32 comprend une deuxième zone de filtration 3 et une restriction 4 présentant une résistance hydraulique donnée constante.

Par « résistance hydraulique » on désigne le rapport entre la différence de pression du fluide créée par la restriction 4 entre l'amont et l'aval de la restriction 4 et le débit volumique de fluide circulant à travers la restriction 4. Par « constante », on entend que la résistance à l'écoulement du fluide au travers de la restriction 4 est indépendante de la quantité de polluants circulant dans le dispositif de filtration 1 ainsi que de l'état de colmatage des zones de filtration 2, 3.

En fonctionnement, le fluide s'écoule à travers le dispositif de filtration 1 selon un sens d'écoulement 17, qui est orienté depuis l'entrée 20 de fluide du dispositif de filtration 1 vers la sortie de fluide 21 du dispositif de filtration 1.

Une première partie du fluide s'écoule par le premier circuit d'écoulement de fluide 31 en passant à travers la première zone de filtration 2 et une deuxième partie de fluide s'écoule par le deuxième circuit d'écoulement de fluide 32 en passant à travers la deuxième zone de filtration 3 et la restriction 4.

Les particules du fluide qui doivent être filtrées sont par exemple des polluants.

Comme illustré en Figure 2, la première zone de filtration 2 présente une première surface de filtration S1, qui est la surface développée d'un premier média filtrant 201 de la première zone 2. De manière connue, ce média filtrant 201 est un milieu poreux qui laisse s'écouler le fluide et retient les particules présentes dans ledit fluide. La deuxième zone 3 de filtration, présente une deuxième surface de filtration S2, qui est la surface développée d'un second média filtrant 301 de la deuxième zone 3.

La première zone de filtration 2 présente en outre une première efficacité de filtration $E_1$ pour une taille de particule P donnée, et la deuxième zone de filtration 3 présente une deuxième efficacité de filtration $E_2$ pour la même taille de particule donnée P. De plus, la première efficacité de filtration $E_1$ est identique à la deuxième efficacité de filtration $E_2$.

L'efficacité de filtration E se définit à l'aide d'un rapport de filtration R, pour une taille de particule P donnée. En référence à la figure 3, le rapport de filtration R d'une zone de filtration 23 se définit, en fonctionnement, comme le rapport entre le nombre de particules, de taille P donnée, comptabilisées à l'amont de la zone de filtration 23, et le nombre de particules, de même taille P donnée, comptabilisées à l'aval de ladite zone de filtration 23. Plus précisément, comme illustré en figure 3, le rapport de filtration R fournit le nombre de particules de taille P donnée retenues par la zone de filtration 23 en fonctionnement, pour une particule de taille P donnée non retenue par ladite zone de filtration 23. Par la suite, l'efficacité de filtration E se définit de la manière suivante :

$$E = \frac{R - 1}{R} * 100$$

où R désigne le rapport de filtration tel que décrit ci-dessus, l'efficacité de filtration E s'exprimant généralement en pourcentage.

Comme illustré sur la figure 3, le rapport de filtration R et l'efficacité de filtration d'une zone de filtration 23 sont mesurés de la manière suivante : on fait circuler un fluide contenant un nombre $N_{amont}$ de particules de la taille P donnée à travers ladite zone de filtration 23. Une fois que la totalité du fluide a circulé à travers ladite zone de filtration 23, le nombre $N_{aval}$ de particules restant dans le fluide, en aval de la zone de filtration 23, est comptabilisé. La comptabilisation peut être effectuée selon n'importe quel protocole bien connu de l'homme du métier, par exemple par comptage au moyen d'un détecteur optique ou électromagnétique des particules de taille P donnée. Le rapport de filtration R est ensuite fourni de la manière suivante :

$$ R = \frac{N_{amont}}{N_{aval}} $$

Dans le dispositif de filtration 1, le rapport de filtration $R_1$ de la première zone de filtration 2 est identique au rapport de filtration $R_2$ de la deuxième zone de filtration 3, à plus ou moins 20% près. En outre, les efficacités de filtration $E_1$, $E_2$ des zones de filtration 2, 3 du dispositif de filtration 1 ont été mesurées dans les mêmes conditions expérimentales. Plus exactement, lesdites efficacités de filtration $E_1$, $E_2$ ont été calculées lors d'opérations telles que précédemment décrites, en utilisant les mêmes paramètres (i.e. même fluide, mêmes particules filtrées, même température, etc.).

Avantageusement, les rapports de filtration $R_1$, $R_2$ des zones de filtration 2, 3 du dispositif de filtration 1 sont de 200 pour la taille de particule P donnée. Ceci correspond à des efficacités de filtration $E_1$, $E_2$ comprises entre 95% et 100%, de préférence comprise entre 98% et 99,9%, par exemple égales à 99,5%. En outre, lorsque le dispositif de filtration 1 est mis en oeuvre dans des systèmes de lubrification, et/ou de refroidissement, et/ou hydraulique, la taille de particule donnée P est comprise entre 2 et 25 microns. De même, lorsque le dispositif de filtration 1 est mis en oeuvre dans des systèmes carburant, la taille de particule donnée P est comprise entre 8 et 50 microns. En tout état de cause, la taille de particule donnée est comprise entre 2 et 50 microns.

Les zones de filtration 2 et 3 sont distinctes mais peuvent appartenir, ou non, à une même cartouche 15, comme explicité par la suite.

La restriction 4 peut être disposée en amont ou en aval de la deuxième zone 3 de filtration, par rapport au sens d'écoulement 17 du fluide. Disposer la restriction 4 en aval de la deuxième zone 3 de filtration permet avantageusement de prévenir sa pollution par le fluide.

On note que le dispositif de filtration 1 peut comprendre une pluralité X de zones de filtration (X>2). Dans ce cas, il est possible de disposer une pluralité de restrictions 4 en amont, ou en aval, de certaines des zones $X_i$ de filtration, les autres zones $X_{j, j\neq i}$ de filtration ne présentant pas de restriction à l'écoulement du fluide. En outre, les X zones de filtration présentent chacune une efficacité de filtration $E_{Xi}$ pour la même taille de particule P donnée, les efficacités de filtration $E_{Xi}$ étant identiques entre elles.

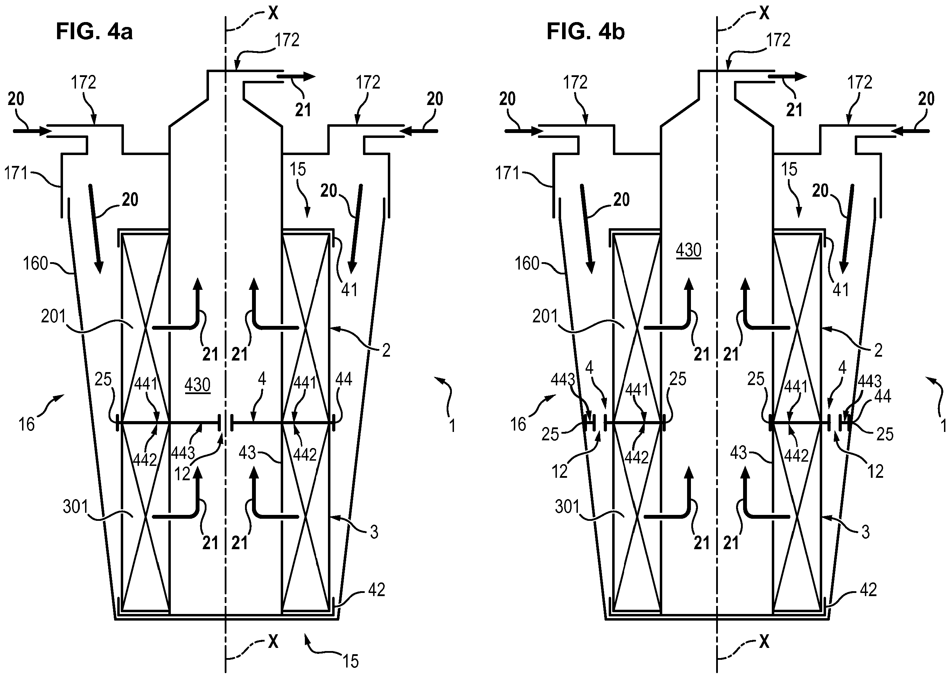

On a représenté sur les figures 4a à 4d des exemples de réalisation d'un dispositif de filtration 1.

Sur chacune de ces figures, le dispositif de filtration 1 comprend une cartouche filtrante remplaçable 15 et un carter 16 propre à contenir la cartouche filtrante 15. Le carter 16 comprend une paroi latérale 160 entourant la cartouche filtrante 15, la paroi latérale 160 présentant une forme générale cylindrique de révolution ou conique.

Le carter 16 est surmontée d'une tête de carter 171 propre à être assemblé avec la cartouche filtrante 15 et présentant des buses 172 de raccordement pour raccorder l'entrée de fluide 20 et la sortie de fluide 21 à des conduites de circulation du fluide. Le carter 16 délimite avec la cartouche filtrante 15 le premier circuit d'écoulement de fluide 31 et le deuxième circuit d'écoulement de fluide 32.

La cartouche filtrante 15 comprend une première zone de filtration 2, une deuxième zone de filtration 3 et une restriction 4. En général, les opérations de maintenance du dispositif de filtration 1, lors de la détection du colmatage, consistent à remplacer la cartouche filtrante 15 par une nouvelle cartouche filtrante 15 non colmatée.

Le dispositif de filtration 1 comprend en outre un flasque supérieur 41, un flasque inférieur 42, un tube central 43 reliant les flasques supérieur 41 et inférieur 42 entre eux, un premier média de filtration 201 entourant le tube central 43 et un deuxième média de filtration 301 entourant le tube central 43, le premier média de filtration 201 et le deuxième média de filtration 301 formant respectivement la première zone de filtration 2 et la deuxième zone de filtration 3.

Le dispositif de filtration 1 comprend par ailleurs un flasque intermédiaire 44 disposé entre le premier média de filtration 201 et le deuxième média de filtration 301. Le flasque intermédiaire 44 comprend une ou plusieurs perforations 12 formant la restriction 4. La restriction 4 est ainsi disposée, selon le sens d'écoulement 17 du fluide, entre la première zone de filtration 2 et la deuxième zone 3 de filtration. En outre, le flasque intermédiaire 44 présente :

- une première face présentant une première portion 441 en contact avec le premier média de filtration 201, et
- une deuxième face, opposée à la première face, et présentant une deuxième portion 442, en contact avec le deuxième média de filtration 301.

Par ailleurs, l'une de la première face ou de la deuxième face présente une troisième portion 443, qui n'est ni en contact avec le premier média de filtration 201, ni en contact avec le deuxième média de filtration 301.

Le tube central 43 peut alors être formé d'une seule pièce, ou de deux pièces fixées de part et d'autre du flasque intermédiaire 44.

Les diamètres des perforations 12 sont choisis pour éviter un colmatage de la restriction 4. En outre, la ou les perforations 12 sont dimensionnées de sorte qu'un rapport entre une aire d'une section de la perforation 12

ou une somme des aires des sections des perforations 12, et une aire de la troisième portion 443, soit inférieur à 50%, de préférence inférieur à 25%, par exemple inférieur à 15%. Ceci permet que, en fonctionnement, une première partie du fluide s'écoule par le premier circuit d'écoulement 31 en passant à travers le premier média de filtration 201 et une deuxième partie du fluide s'écoule par le deuxième circuit d'écoulement 32 en passant à travers le deuxième média de filtration 301 et la restriction 4. De cette manière, le premier média de filtration 201 atteint un état de colmatage prédéterminé avant le deuxième média de filtration 301.

Les zones 2 et 3 de filtration sont de révolution, par exemple de forme de type cylindrique, autour d'un axe de symétrie X-X du dispositif de filtration 1, qui est l'axe du tube central 43, et sont empilées l'une sur l'autre.

Le tube central 43 délimite un canal central 430 d'écoulement du fluide.

Le fluide entre dans le carter 16 par l'entrée 20 et en ressort par la sortie 21. Une première partie du fluide traverse la première zone de filtration 2 et ressort du dispositif de filtration 1. Simultanément, une deuxième partie du fluide traverse successivement la restriction 4 et la deuxième zone 3 de filtration, mais non la première zone 2 de filtration, puis ressort du dispositif de filtration 1. La répartition du débit de fluide entre ces deux zones 2, 3 dépend de la période temporelle, comme explicité par la suite.

Comme visible sur les figures, le fluide peut circuler à travers la cartouche 15 en passant à travers les médias de filtration 201, 301 en pénétrant par la surface externe de chaque média de filtration 201, 301, et en ressortant par la surface interne du média de filtration 201, 301 (figures 4a et 4b). Autrement dit, le fluide passe à travers les médias de filtration 201, 301 vers l'axe de symétrie X-X.

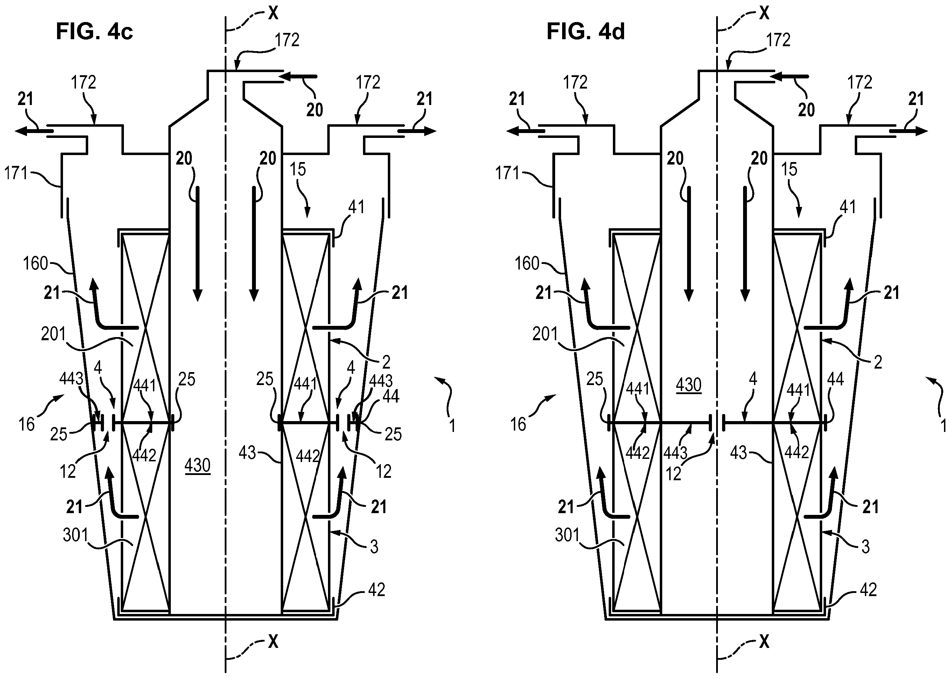

Alternativement, le fluide peut circuler à travers la cartouche 15 en passant à travers les médias de filtration 201, 301 en pénétrant par la surface interne de chaque média de filtration 201, 301, et en ressortant par la surface externe du média de filtration 201, 301 (figures 4c et 4d). Autrement dit, le fluide passe à travers les médias de filtration 201, 301 depuis l'axe de symétrie X-X.

De plus, la restriction 4 peut être agencée en aval (figures 4a et 4c) ou en amont (figures 4b et 4d) de la deuxième zone de filtration 3, par rapport au sens d'écoulement 17 du fluide.

Par ailleurs, le flasque intermédiaire 44 peut comprendre une extension à l'intérieur du canal central de circulation 430 (figures 4a et 4d), l'extension présentant une ou plusieurs perforations 12 formant la restriction 4. Alternativement, c'est le carter 16, au niveau de la surface interne du fond du carter 16, qui comprend l'extension s'étendant à l'intérieur du canal central 430 de circulation de fluide lorsque la cartouche filtrante 15 est positionnée dans le carter 16, ladite extension comprenant une ou plusieurs perforations 12 formant la restriction 4. Dans ce cas, c'est le rapport entre une aire d'une section de la perforation 12 ou une somme des aires des sections des perforations 12, et une aire totale d'une face 443 de l'extension du flasque intermédiaire 44 qui s'étend à l'intérieur du canal central de circulation 430, qui est inférieur à 50%, de préférence inférieur à 25%, par exemple inférieur à 15%.

Sur la figure 4b, le flasque intermédiaire 44 comprend une extension en saillie entourant la cartouche filtrante 15, l'extension présentant une ou plusieurs perforations 12 réparties de manière circonférentielles autour de l'axe X-X. L'extension est par exemple un anneau perforé s'étendant en saillie à l'extérieur du tube central 43, ou un flasque en saillie. Alternativement, c'est le carter 16, au niveau de sa surface interne, qui comprend une extension en saillie comprenant une ou plusieurs perforations 12 réparties de manière circonférentielles autour de l'axe X-X. La position de cette extension selon l'axe de révolution X-X du carter 16 est calibrée pour correspondre à la jonction entre la première zone de filtration 2 et la deuxième zone de filtration 3 lorsque la cartouche filtrante 15 est positionnée dans le carter 16. Dans ce cas, c'est le rapport entre une aire d'une section de la perforation 12 ou une somme des aires des sections des perforations 12, et une aire totale d'une face 443 de l'extension en saillie du flasque intermédiaire 44 qui entoure la cartouche filtrante, ou de l'extension en saillie 443 du carter 16, qui est inférieur à 50%, de préférence inférieur à 25%, par exemple inférieur à 15%.

Dans ces exemples de réalisation, la première zone de filtration 2 et la deuxième zone de filtration 3 sont raccordées en parallèle entre l'entrée 20 et la sortie 21 du dispositif de filtration 1.

Les extensions du flasque intermédiaire 44 associées aux perforations 12, créent une résistance à l'écoulement du fluide en amont ou en aval de la deuxième zone 3 de filtration.

Si nécessaire, un ou plusieurs joints d'étanchéité 25 sont prévus, lesdits joints 25 étant par exemple disposés au niveau de la jonction avec le carter 16 et/ou de la jonction avec les médias filtrant 201 et 301.

Un joint d'étanchéité 25 peut notamment s'avérer nécessaire si les dimensions des perforations 12 sont d'un ordre comparable aux jeux envisagés sans étanchéité.

Le joint d'étanchéité 25 est par exemple un joint torique s'étendant autour de l'extension 12, entre l'extension 12 et la paroi latérale 160 du carter 16.

Si un joint d'étanchéité 25 est requis, celui-ci est par exemple porté par la cartouche filtrante 15, ou également par le carter 16, au même niveau que l'extension 12.

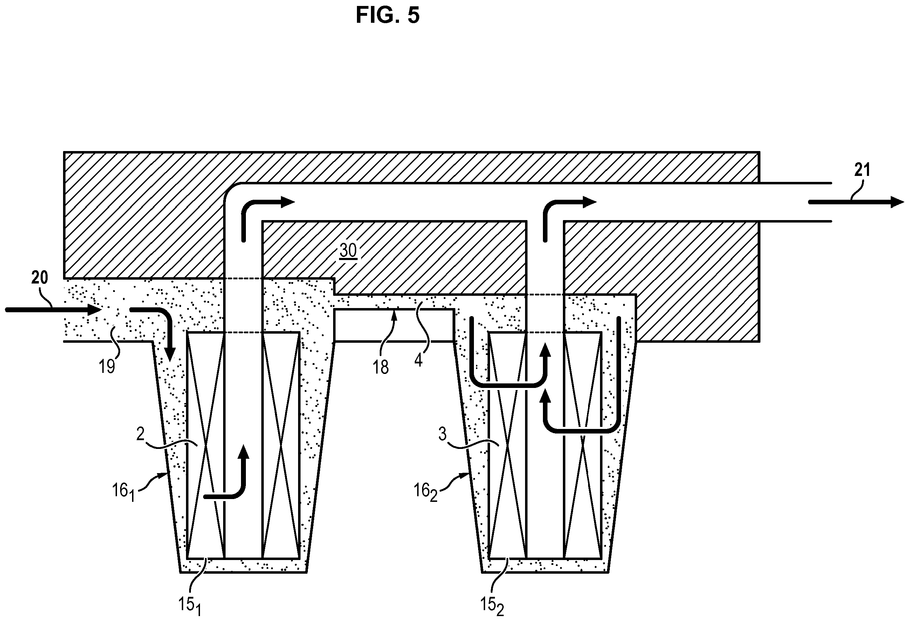

On a illustré en Figure 5 un autre exemple de réalisation d'un dispositif de filtration 1 comprenant deux cartouches filtrantes $15_1$ et $15_2$ distinctes.

Le dispositif de filtration 1 comprend typiquement :

- une première cartouche filtrante $15_1$ remplaçable comprenant la première zone 2 de filtration,
- une deuxième cartouche filtrante $15_2$ remplaçable comprenant la deuxième zone 3 de filtration.

La restriction 4 est disposée dans le second canal de raccordement 18 d'écoulement connectant la première cartouche filtrante $15_1$ à la deuxième cartouche filtrante $15_2$.

La première cartouche filtrante $15_1$ est par exemple reçue dans un premier carter $16_1$ du dispositif de filtration 1, et la deuxième cartouche filtrante $15_2$ est par exemple reçue dans un deuxième carter $16_2$ du dispositif de filtration 1. La première cartouche filtrante $15_1$ et le premier carter $16_1$ peuvent avantageusement présenter respectivement la même forme, et être de même taille, que la deuxième cartouche filtrante $15_2$ et le deuxième carter $16_2$. En variante, ils peuvent être de taille et/ou de forme différentes.

Les carters $16_1$, $16_2$ sont en général fixées sur la tête 30 du dispositif de filtration 1, la tête 30 comprenant également au moins un canal d'évacuation du fluide 21.

Comme visible sur la figure 5, dans cet exemple de réalisation, le fluide circule à travers les zones de filtration 2 et 3 depuis la surface radialement externe vers la surface radialement interne de chacune des zones de filtration 2 et 3.

Dans cet exemple de réalisation, la résistance hydraulique de la restriction 4 vient du fait que la section de premier canal de raccordement 19 en amont de la première zone de filtration 2 est supérieure à la section de second canal de raccordement 18 en amont de la deuxième zone de filtration 3.

### *Fonctionnement du dispositif de filtration à particules*

Le principe du fonctionnement du dispositif de filtration 1 peut être décrit de la façon suivante.

Le dispositif de filtration 1 permet l'obtention d'un colmatage en deux étapes.

En fonctionnement, le dispositif de filtration 1 est configuré pour autoriser un écoulement d'une première partie du fluide par le premier circuit d'écoulement 31 en passant à travers la première zone de filtration 2, et d'une deuxième partie du fluide par le deuxième circuit d'écoulement 32 en passant à travers la deuxième zone de filtration 3 et la restriction 4.

Toutefois, le débit du fluide à travers ces zones de filtration 2 et 3 est différent, et ce malgré le caractère identique de la première efficacité $E_1$ et de la deuxième efficacité $E_2$ de filtration. Le débit du fluide suit en effet la distribution suivante.

Dans une première plage temporelle, le dispositif de filtration 1 autorise un écoulement du fluide préférentiellement à travers la première zone de filtration 2. Cet écoulement préférentiel est induit par la présence de la restriction 4 dans le deuxième circuit d'écoulement 32.

Le débit du fluide qui traverse la première zone de filtration 2 est donc supérieur au débit du fluide qui travers la deuxième zone de filtration 3.

Dans une deuxième plage temporelle, en général consécutive à la première plage temporelle, le dispositif de filtration 1 autorise un écoulement du fluide préférentiellement à travers la deuxième zone de filtration 3. Ceci vient du fait que, lorsque le colmatage de la première zone de filtration 2 est devenu tel qu'il offre une résistance hydraulique à l'écoulement du fluide supérieure à celle de la restriction 4 et de la deuxième zone de filtration 3, alors l'écoulement de fluide s'oriente préférentiellement à travers la seconde zone de filtration 3. Le débit du fluide qui traverse la deuxième zone de filtration 3 est donc supérieur au débit du fluide qui traverse la première zone de filtration 2.

Ce fonctionnement permet à la première zone de filtration 2 d'atteindre un état de colmatage prédéterminé avant la deuxième zone de filtration 3, les deux zones 2 et 3 étant continuellement fonctionnelles avec la même efficacité de filtration $E_1$, $E_2$.

On définit un « état de colmatage » d'une zone de filtration comme le rapport entre une quantité de polluant capté par la zone à un instant donné, et une quantité de polluant maximale prédéfinie à partir de laquelle la zone est considérée comme colmatée. L'état de colmatage peut, par exemple, être exprimé en pourcentage. Un « colmatage » peut quant à lui être exprimé en quantité de polluants capté par unité de surface filtrante (en $g/dm^2$ par exemple). On comprend, avec cette définition, que plus l'état de colmatage d'une zone de filtration augmente, plus le débit du fluide à travers la zone diminue.

Le dispositif de filtration 1 permet d'obtenir un colmatage en deux étapes, grâce à une exposition simultanée des deux zones de filtration 2 et 3 au fluide circulant entre l'entrée 20 et la sortie 21.

La première zone de filtration 2 (surface de filtration S1) et la deuxième zone de filtration 3 (surface de filtration S2, non nécessairement identique à S1) sont toutes les deux exposées, de manière simultanée, au fluide circulant à travers le dispositif de filtration 1. Elles sont donc toutes les deux susceptibles de se colmater.

Le dispositif de filtration peut être modélisé de la façon suivante.

$$S_1 + S_2 = S_T$$

$$S_1 = \lambda S_T$$

$$0 < \lambda < 1$$

Dans ces équations, $S_T$ est la surface totale d'un dispositif de filtration équivalent comprenant une unique zone de filtration.

L'une des deux surfaces (S1) est favorisée par rapport à l'autre (S2) qui est protégée du flux par la restriction 4. Ceci permet de faire chuter la pression totale du fluide qui se situe en amont de la seconde surface filtrante S2.

La perte de pression $\Delta P_{restriction}$ à travers la restriction 4 a une évolution (quadratique) en fonction du débit volumique à travers la deuxième zone 3 de filtration, ou de façon équivalente, en fonction de la vitesse ($v_2$) de passage du fluide à travers la deuxième zone 3 de filtration.

$$\Delta P_{restriction} = \frac{\rho v_2^2}{2} \times \xi_{restriction}(\text{Re}),$$

avec :

$\rho$ : masse volumique du fluide (kg.m$^{-3}$) ;
$v_2$ : vitesse de fluide (m.s$^{-1}$)
$\xi_{restriction}$ : coefficient de perte de charge hydraulique du frein

Le coefficient $\xi_{restriction}$ caractérise la dissipation d'énergie mécanique du fluide sous forme de chaleur au passage de la restriction 4, et dépend de la géométrie de la restriction 4 et du nombre de Reynolds de l'écoulement du fluide au travers de la restriction 4.

Le fonctionnement du dispositif de filtration 1 va être décrit plus en détail sur un exemple dans lequel S1=S2. Cet exemple n'est toutefois pas limitatif.

Dans une première plage temporelle, le fluide entrant dans le dispositif de filtration 1 est préférentiellement orienté vers la première zone de filtration 2.

On note que le débit du fluide à travers la première zone de filtration 2 est supérieur au débit moyen qui serait constaté sur une surface de référence $S_T$ unique ($S_T = S1 + S2$).

Par conséquent, le colmatage de la première zone de filtration 2 va plus rapidement causer une valeur de différence de pression $\Delta P$ significative, et ce pour deux raisons : premièrement, l'apport en particules est supérieur à la densité moyenne observée pour une unique surface $S_T$, et deuxièmement le débit du fluide au niveau de cette première zone de filtration 2 est supérieur au débit moyen observé pour une unique surface $S_T$.

Un accroissement plus rapide de la perte de pression $\Delta P$ entre l'entrée 20 et la sortie 21 du dispositif de filtration 1 est obtenu, ce qui permet de relever les valeurs initiales et moyennes de la perte de pression de différence de pression $\Delta P$ globale entre l'entrée 20 et la sortie de fluide 21.

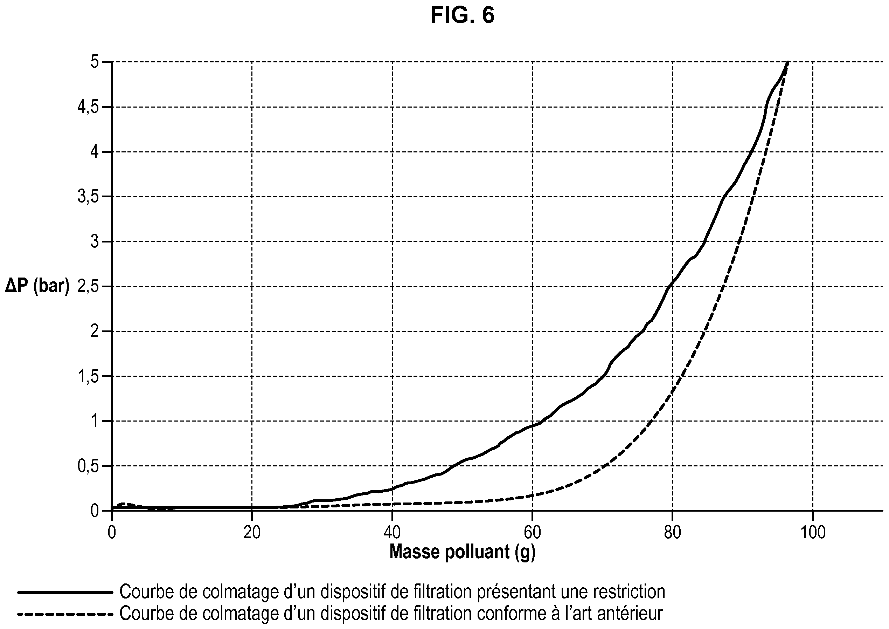

On a représenté en Figure 6 des courbes de colmatage obtenues avec deux dispositifs de filtration différents, l'un comprenant une restriction 4 selon un exemple de réalisation de l'invention, et l'autre étant un dispositif classique conforme à l'art antérieur. Ces courbes de colmatage fournissent l'évolution de perte de pression $\Delta P$ à travers chaque dispositif de filtration en fonction de la masse de polluant captée par le dispositif de filtration.

Comme on peut le constater, la courbe obtenue pour un dispositif de filtration 1 selon un exemple de réalisation de l'invention présente un accroissement plus régulier et moins brusque que la courbe associée aux dispositifs de filtration classiques de l'art antérieur, pour une efficacité de filtration identique. La détection du colmatage s'en trouve donc facilitée.

Plus le niveau de colmatage augmente dans la première zone de filtration 2, plus la deuxième zone de filtration 3 redevient propice à l'écoulement. En effet, en raison du colmatage progressif de la première zone 2 de filtration, le fluide a tendance à se diriger préférentiellement vers la deuxième zone de filtration 3 malgré la présence de la restriction 4. A mesure que la première zone de filtration 2 se colmate, le débit du fluide à travers la deuxième zone de filtration 3 croît, et finit donc par devenir supérieur au débit du fluide à travers la première zone de filtration 2, qui décroît.

Progressivement, la deuxième zone de filtration 3 se colmate également.

De façon continue, on réalise donc un déséquilibre du système qui permet de linéariser la courbe de colmatage qui fournit la différence de pression $\Delta P$ en fonction du temps, la différence de pression $\Delta P$ étant directement corrélé à la densité de colmatage. Cette linéarisation est illustrée sur la figure 6.

Une fois les deux zones de filtration 2 et 3 colmatées, le niveau de perte de charge $\Delta P_{max}$ est sensiblement égal à celui qu'on aurait constaté avec un dispositif de filtration présentant une unique surface de filtration $S_T$, ce qui permet de conserver de bonnes performances d'autonomie (i.e. de capacité de rétention du dispositif de filtration 1) tout en obtenant un système plus linéaire et plus fiable, puisqu'il n'est pas nécessaire d'utiliser des pièces mobiles susceptibles d'augmenter les modes et probabilités de défaillance du dispositif et du système de filtration..

### *Calibration du dispositif de filtration*

Il est possible de calibrer le dispositif de filtration 1 afin de répondre à des spécifications. Les spécifications peuvent notamment porter sur l'évolution temporelle de la perte de pression du fluide à travers le dispositif de filtration 1, qui est la courbe généralement utilisée pour détecter le colmatage du dispositif de filtration 1. Les spécifications peuvent également comprendre une valeur maximale de perte de pression $\Delta P_{max}$ lorsque le dispositif de filtration 1 est totalement colmaté, ou après une période temporelle prédéterminée.

La calibration du dispositif de filtration 1 peut être réalisée de la manière suivante.

Il ressort de la modélisation du fonctionnement du dispositif de filtration 1 que différents paramètres influent sur la courbe de colmatage, pour un fluide donné et des conditions expérimentales données, et en particulier :

- la surface S1 de filtration de la première zone de filtration 2 ;
- la surface S2 de filtration de la deuxième zone de filtration 3 ;
- la résistance hydraulique de la restriction 4.

La résistance hydraulique de la restriction 4 dépend de paramètres géométriques de la restriction 4. Par exemple, dans le cas d'une extension comprenant des perforations 12, le nombre et le diamètre des perforations 12 conditionnent la résistance à l'écoulement. Dans le cas d'un canal 18 à section réduite, la section du canal conditionne la résistance à l'écoulement.

La courbe de colmatage peut être simulée par ordinateur, pour un dispositif de filtration donné. Il est donc possible de répondre aux spécifications temporelles en effectuant des itérations sur un ou plusieurs des paramètres précités.

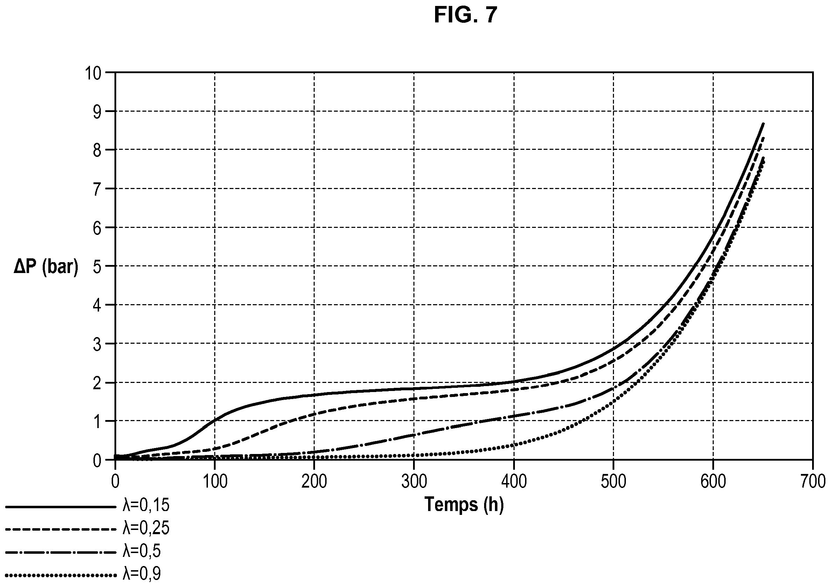

Par exemple, en Figure 7, plusieurs courbes de colmatage ont été simulées pour différentes valeurs de

$$\lambda = \frac{S_1}{S_T}$$

rapport de surface , pour un fluide donné et dans des conditions expérimentales données.

En Figure 7, la courbe en trait plein C1 correspond à $\lambda$ = 0,15, la courbe en traits pointillés longs C2 correspond à $\lambda$ = 0,25, la courbe en traits pointillés alternés longs et courts C3 correspond à $\lambda$ = 0,5 et la courbe en traits pointillés courts C4 correspond à $\lambda$ = 0,9.

Pour ce dispositif de filtration, la courbe C3 présente le profil le plus optimal. En effet, elle ne présente pas de variations trop brusques. En outre, elle n'introduit pas de perte de pression supplémentaire lorsque le dispositif de filtration 1 est complètement colmaté.

### Procédé de surveillance d'un état de colmatage

Le dispositif de filtration 1 est mis en oeuvre pour filtrer un fluide contenant des particules.

Il s'avère donc utile d'être en mesure de surveiller l'état de colmatage du dispositif 1 lors de son fonctionnement, de sorte à pouvoir prédire les opérations de maintenance ou détecter un événement inhabituel au sein du circuit hydraulique. Un tel événement peut être par exemple la rupture d'un composant de circuit aéronautique entraînant le déversement soudain d'une grande quantité de particules au sein du fluide.

Le colmatage du dispositif de filtration 1 peut être détecté en mesurant la perte de pression $\Delta P$ à travers le dispositif de filtration 1 (entre l'entrée de fluide 20 et la sortie de fluide 21) en fonction du temps.

La relation entre la perte de pression $\Delta P$ et le colmatage du dispositif de filtration 1 s'exprime par un modèle de colmatage. Ce modèle est connu dès la conception du dispositif de filtration 1 et peut être fourni par le fabricant. Ce modèle fournit notamment une courbe caractéristique de référence définissant un état de colmatage en fonction de la différence de pression $\Delta P$ et en fonction de la température du fluide et un débit de fluide à l'entrée de fluide. Ce modèle peut enfin être le résultat d'une calibration du dispositif de filtration 1.

Il est également possible de prévoir une étape préalable consistant à déterminer la courbe caractéristique en soumettant un dispositif de filtration 1 de référence à une circulation d'un fluide contenant des particules avec une composition, des caractéristiques, et un taux de concentration prédéterminés, à une température prédéterminée et à un débit prédéterminé, et en mesurant une évolution de la différence de pression entre l'entrée de fluide et la sortie de fluide au cours du temps.

Ainsi un procédé de de surveillance d'un état de colmatage d'un dispositif de filtration 1 comprend les étapes consistant à :

- mesurer une différence de pression entre l'entrée de fluide et la sortie de fluide,
- mesurer une température du fluide et un débit de fluide à l'entrée de fluide, et
- déterminer un état de colmatage à partir de la différence de pression, de la température et du débit de fluide mesurés, et d'une courbe caractéristique de référence définissant un état de colmatage en fonction de la différence de pression.

### Système de filtration à particules

Un système de surveillance d'un état de colmatage du dispositif de filtration 1 peut comprendre, outre le dispositif 1, un module de surveillance de l'état de colmatage du dispositif de filtration 1, le module de surveillance étant configuré pour recevoir un signal représentatif d'une différence de pression entre l'entrée de fluide 20 et la sortie de fluide 21 et pour déterminer un état de colmatage du dispositif de filtration 1 en fonction de la différence de pression. Cette détermination est permise par comparaison avec une courbe caractéristique de référence définissant un état de colmatage en fonction de la différence de pression. Cette courbe peut être fournie par le fabricant ou déterminée préalablement par l'utilisateur, lors d'une étape de calibration du dispositif de filtration 1 ou non.

Le module de surveillance de l'état de colmatage précédemment décrit peut également être configuré pour recevoir des signaux représentatifs de la température et du débit de fluide à l'entrée de fluide 20, et pour tenir compte de la température du fluide et du débit de fluide dans la détermination de l'état de colmatage.

En tout état de cause, le module de surveillance du système de surveillance est configuré pour mettre en oeuvre le procédé de surveillance de l'état de colmatage du dispositif 1, tel que précédemment décrit.

L'invention trouve de nombreuses applications, notamment dans le domaine de l'aéronautique, ou dans tout autre domaine technique nécessitant un dispositif de filtration à particules dont le colmatage doit être détecté.

**Revendications**

1. Procédé de surveillance de l'état de colmatage d'un dispositif de filtration (1) à particules pour la filtration d'un fluide, le dispositif de filtration (1) comprenant :

   - une entrée de fluide (20),
   - une sortie de fluide (21),
   - un premier circuit d'écoulement de fluide (31) reliant l'entrée de fluide (20) à la sortie de fluide (21) et comprenant une première zone de filtration (2) présentant une première surface de filtration ($S_1$) et une première efficacité de filtration ($E_1$) pour une taille de particule donnée (P), et
   - un deuxième circuit d'écoulement de fluide (32) reliant l'entrée de fluide (20) à la sortie de fluide (21), et comprenant :

     o une deuxième zone de filtration (3) présentant une deuxième surface de filtration ($S_2$) et une deuxième efficacité de filtration ($E_2$), identique à la première efficacité de filtration (2), pour la taille de particule donnée (P), et
     o une restriction (4) présentant une résistance hydraulique constante, de sorte qu'en fonctionnement, une première partie du fluide s'écoule par le premier circuit d'écoulement (31) en passant à travers la première zone de filtration (2) et une deuxième partie du fluide s'écoule par le deuxième circuit d'écoulement (32) en passant à travers la deuxième zone de filtration (3) et la restriction (4), et la première zone de filtration (2) atteint un état de colmatage prédéterminé avant la deuxième zone de filtration (3),

   dans lequel la première zone de filtration (2) présente un premier rapport de filtration ($R_1$) et la deuxième zone de filtration (3) présente un deuxième rapport de filtration ($R_2$), le premier rapport de filtration ($R_1$) étant identique au deuxième rapport de filtration ($R_2$), dans lequel le rapport de filtration d'une zone de filtration (23) se définit, en fonctionnement, comme le rapport entre le nombre de particules, de taille (P) donnée, comptabilisées à l'amont de la zone de filtration (23), et le nombre de particules, de même taille (P) donnée, comptabilisées à l'aval de ladite zone de filtration (23), le procédé comprenant des étapes consistant à :

   - mesurer une différence de pression entre l'entrée de fluide (20) et la sortie de fluide (21),
   - mesurer une température du fluide et un débit de fluide à l'entrée de fluide (20), et

   déterminer un état de colmatage à partir de la différence de pression, de la température du fluide et du débit de fluide mesurés, et d'une courbe caractéristique de référence définissant un état de colmatage en fonction de la différence de pression.

2. Procédé de surveillance de l'état de colmatage d'un dispositif de filtration (1) selon la revendication 1, dans lequel le dispositif de filtration (1) comprend une cartouche filtrante remplaçable (15) comprenant la première zone de filtration (2) et la deuxième zone de filtration (3), et un carter (16) propre à contenir la cartouche filtrante (15) et délimitant avec la cartouche filtrante (15) le premier circuit d'écoulement de fluide (31) et le deuxième circuit d'écoulement de fluide (32).

3. Procédé de surveillance de l'état de colmatage d'un dispositif de filtration (1) selon la revendication 2, dans lequel le carter (16) comprend la restriction (4).

4. Procédé de surveillance de l'état de colmatage d'un dispositif de filtration (1) selon la revendication 3, dans lequel le carter (16) comprend une extension entourant la cartouche filtrante (15), l'extension comprenant une ou plusieurs perforation(s) (12) formant la restriction (4).

5. Procédé de surveillance de l'état de colmatage d'un dispositif de filtration (1) selon la revendication 3, dans lequel le dispositif de filtration (1) comprend un canal central (430) de circulation de fluide entouré par la première zone de filtration (2) et par la deuxième zone de filtration (3), et dans lequel le carter (16) comprend une extension s'étendant à l'intérieur du canal central (430) de circulation de fluide, l'extension comprenant une ou plusieurs perforation(s) (12) formant la restriction (4).

6. Procédé de surveillance de l'état de colmatage d'un dispositif de filtration (1) selon l'une des revendications 4 et 5, dans lequel un rapport un entre une aire d'une section de la perforation (12) ou une somme des aires des sections des perforations (12), et une aire totale d'une face (443) de l'extension, est inférieur à 50%, de préférence inférieur à 25%.

7. Procédé de surveillance de l'état de colmatage d'un dispositif de filtration (1) selon l'une des revendications 1 et 2, dans lequel :

- la première zone de filtration (2) comprend un premier média de filtration (201),
- la deuxième zone de filtration (3) comprend un deuxième média de filtration (301),

le dispositif de filtration (1) comprenant en outre un flasque intermédiaire (44) disposé entre le premier média de filtration (201) et le deuxième média de filtration (301), le flasque intermédiaire (44) comprenant :

- une première face présentant une première portion (441) en contact avec le premier média de filtration (201),
- une deuxième face, opposée à la première face, et présentant une deuxième portion (442), en contact avec le deuxième média de filtration (301),
l'une de la première face ou de la deuxième face présentant une troisième portion (443) qui n'est ni en contact avec le premier média de filtration (201), ni en contact avec le deuxième média de filtration (301),
- une ou plusieurs perforation(s) (12) formant la restriction (4), et dans lequel un rapport entre une aire d'une section de la perforation (12) ou une somme des aires des sections des perforations (12), et une aire de la troisième portion (443), est inférieur à 50%, de préférence inférieur à 25%.

8. Procédé de surveillance de l'état de colmatage d'un dispositif de filtration (1) selon l'une des revendications 2 à 7, dans lequel le carter (16) comprend une paroi latérale (160) entourant la cartouche filtrante (15), la paroi latérale (160) présentant une forme générale de révolution, par exemple cylindrique de révolution ou conique de révolution.

9. Procédé de surveillance de l'état de colmatage d'un dispositif de filtration (1) selon l'une des revendications 2 à 8, dans lequel le carter (16) comprend une tête de carter (171) propre à être assemblée avec la cartouche filtrante (15) et présentant des buses de raccordement (172) pour raccorder l'entrée de fluide (20) et la sortie de fluide (21) à des conduites de circulation du fluide.

10. Procédé de surveillance de l'état de colmatage d'un dispositif de filtration (1) selon l'une des revendications 1 à 9, dans lequel la restriction (4) est disposée en aval de la deuxième zone de filtration (3) dans le sens de l'écoulement (17) du fluide dans le deuxième circuit d'écoulement de fluide (32).

11. Procédé de surveillance de l'état de colmatage d'un dispositif de filtration (1) selon l'une des revendications 1 à 9, dans lequel la restriction (4) est disposée en amont de la deuxième zone de filtration (3) dans le sens de l'écoulement (17) du fluide dans le deuxième circuit d'écoulement de fluide (32).

12. Procédé de surveillance de l'état de colmatage d'un dispositif de filtration (1) selon l'une des revendications 1 à 11, dans lequel le rapport entre la première surface de filtration $(S_1)$ et la somme des première et deuxième surfaces de filtration $(S_T)$ est compris entre 0,3 et 0,7, de préférence entre 0,4 et 0,6, par exemple 0,5.

13. Procédé de surveillance de l'état de colmatage d'un dispositif de filtration (1) selon la revendication 1, dans lequel le dispositif de filtration (1) comprend :

- une première cartouche filtrante remplaçable $(15_1)$ comprenant la première zone de filtration (2),
- une deuxième cartouche filtrante remplaçable $(15_2)$ comprenant la deuxième zone de filtration (3), et
- un second canal de raccordement (18) reliant la première cartouche filtrante $(15_1)$ et la deuxième cartouche filtrante $(15_2)$, le second canal de raccordement (18) formant la restriction (4).

14. Procédé de surveillance de l'état de colmatage d'un dispositif de filtration (1) selon l'une des revendications 1 à 13, dans lequel les efficacités de filtration $(E_1, E_2)$ sont comprises entre 95% et 100%, de préférence comprises entre 98% et 99,9%, par exemple 99,5%, pour la taille de particule donnée (P).

15. Procédé de surveillance de l'état de colmatage d'un dispositif de filtration (1) selon l'une des revendications 1 à 14, dans lequel la taille de particule donnée (P) est comprise entre 2 et 25 microns.

16. Procédé de surveillance de l'état de colmatage d'un dispositif de filtration (1) selon l'une des revendications 1 à 15, dans lequel la taille de particule donnée (P) est comprise entre 8 et 50 microns.

17. Procédé de surveillance de l'état de colmatage d'un dispositif de filtration (1) selon l'une des revendications 1 à 16, comprenant en outre une étape préalable consistant à déterminer la courbe caractéristique en soumettant un dispositif de filtration (1) de référence à une circulation d'un fluide contenant des particules avec une composition, des caractéristiques, et un taux de concentration prédéterminés, à une température et à un débit prédéterminés, et en mesurant une évolution de la différence de pression entre l'entrée de fluide (20) et la sortie de fluide (21) au cours du temps.

18. Système de filtration pour la filtration d'un fluide, comprenant un dispositif de filtration (1) à particules pour la filtration d'un fluide, le dispositif de filtration (1) comprenant :

- une entrée de fluide (20),
- une sortie de fluide (21),
- un premier circuit d'écoulement de fluide (31) reliant l'entrée de fluide (20) à la sortie de fluide (21) et comprenant une première zone de filtration (2) présentant une première surface de filtration ($S_1$) et une première efficacité de filtration ($E_1$) pour une taille de particule donnée (P), et
- un deuxième circuit d'écoulement de fluide (32) reliant l'entrée de fluide (20) à la sortie de fluide (21), et comprenant :

  o une deuxième zone de filtration (3) présentant une deuxième surface de filtration ($S_2$) et une deuxième efficacité de filtration ($E_2$), identique à la première efficacité de filtration (2), pour la taille de particule donnée (P), et
  o une restriction (4) présentant une résistance hydraulique constante, de sorte qu'en fonctionnement, une première partie du fluide s'écoule par le premier circuit d'écoulement (31) en passant à travers la première zone de filtration (2) et une deuxième partie du fluide s'écoule par le deuxième circuit d'écoulement (32) en passant à travers la deuxième zone de filtration (3) et la restriction (4), et la première zone de filtration (2) atteint un état de colmatage prédéterminé avant la deuxième zone de filtration (3),

**caractérisé en ce que**

la première zone de filtration (2) présente un premier rapport de filtration ($R_1$) et la deuxième zone de filtration (3) présente un deuxième rapport de filtration ($R_2$), le premier rapport de filtration ($R_1$) étant identique au deuxième rapport de filtration ($R_2$), dans lequel le rapport de filtration d'une zone de filtration (23) se définit, en fonctionnement, comme le rapport entre le nombre de particules, de taille (P) donnée, comptabilisées à l'amont de la zone de filtration (23), et le nombre de particules, de même taille (P) donnée, comptabilisées à l'aval de ladite zone de filtration (23), le système de filtration comprenant en outre un module de surveillance de l'état de colmatage du dispositif de filtration (1), le module de surveillance étant configuré pour recevoir des signaux représentatifs d'une différence de pression entre l'entrée de fluide (20) et la sortie de fluide (21), de la température et du débit de fluide à l'entrée de fluide (20), et pour déterminer un état de colmatage du dispositif de filtration (1) en fonction de la différence de pression entre l'entrée de fluide (20) et la sortie de fluide (21), de la température et du débit de fluide à l'entrée de fluide (20), la détermination d'un état de colmatage du dispositif de filtration (1) étant effectuée par comparaison avec une courbe caractéristique de référence définissant un état de colmatage en fonction de la différence de pression.

**Patentansprüche**

1. Verfahren zur Überwachung des Verstopfungszustands einer Partikelfiltrationsvorrichtung (1) für die Filtration eines Fluids, wobei die Filtrationsvorrichtung (1) umfasst:

   - einen Fluideinlass (20),
   - einen Fluidauslass (21),
   - einen ersten Fluidströmungsweg (31), der den Fluideinlass (20) mit dem Fluidauslass (21) verbindet und eine erste Filtrationszone (2) umfasst, die eine erste Filtrationsoberfläche ($S_1$) und eine erste Filtrationseffizienz ($E_1$) für eine gegebene Partikelgröße (P) aufweist, und
   - einen zweiten Fluidströmungsweg (32), der den Fluideinlass (20) mit dem Fluidauslass (21) verbindet und umfasst:

     o eine zweite Filtrationszone (3), die eine zweite Filtrationsoberfläche ($S_2$) und eine zweite Filtrationseffizienz ($E_2$), die mit der ersten Filtrationseffizienz (2) identisch ist, für die gegebene Partikelgröße (P) aufweist, und
     o eine Verengung (4), die einen konstanten hydraulischen Widerstand aufweist, so dass im Betrieb ein erster Teil des Fluids durch den ersten Strömungsweg (31) fließt und dabei die erste Filtrationszone (2) durchquert und ein zweiter Teil des Fluids durch den zweiten Strömungsweg (32) fließt und dabei die zweite Filtrationszone (3) und die Verengung (4) durchquert und die erste Filtrationszone (2) einen vorher festgelegten Verstopfungszustand vor der zweiten Filtrationszone (3) erreicht,

   wobei die erste Filtrationszone (2) ein erstes Filtrationsverhältnis ($R_1$) aufweist und die zweite Filtrationszone (3) ein zweites Filtrationsverhältnis ($R_2$) aufweist, wobei das erste Filtrationsverhältnis ($R_1$) mit dem zweiten Filtrationsverhältnis ($R_2$) identisch ist, wobei sich das Filtrationsverhältnis einer Filtrationszone (23) im Betrieb als das Verhältnis zwischen der Anzahl von Partikeln gegebener Größe (P), ermittelt vor der Filtrationszone (23), und der Anzahl von Partikeln gleicher gegebener Größe (P), ermittelt nach der Filtrationszone (23), definiert,

wobei das Verfahren Schritte umfasst, die darin bestehen:

- Messen einer Druckdifferenz zwischen dem Fluideinlass (20) und dem Fluidauslass (21),
- Messen einer Temperatur des Fluids und eines Fluiddurchflusses am Fluideinlass (20), und

Bestimmen eines Verstopfungszustands ausgehend von der gemessenen Druckdifferenz, von der gemessenen Temperatur des Fluids und vom dem gemessenen Fluiddurchfluss und einer charakteristischen Referenzkurve, die einen Verstopfungszustand in Abhängigkeit von der Druckdifferenz definiert.

2. Verfahren zur Überwachung des Verstopfungszustands einer Filtrationsvorrichtung (1) nach Anspruch 1, wobei die Filtrationsvorrichtung (1) eine austauschbare Filterkartusche (15) umfasst, die die erste Filtrationszone (2) und die zweite Filtrationszone (3) umfasst, und ein Gehäuse (16), das imstande ist, die Filterkartusche (15) zu enthalten und mit der Filterkartusche (15) den ersten Fluidströmungsweg (31) und den zweiten Fluidströmungsweg (32) begrenzt.

3. Verfahren zur Überwachung des Verstopfungszustands einer Filtrationsvorrichtung (1) nach Anspruch 2, wobei das Gehäuse (16) die Verengung (4) umfasst.

4. Verfahren zur Überwachung des Verstopfungszustands einer Filtrationsvorrichtung (1) nach Anspruch 3, wobei das Gehäuse (16) eine Erweiterung umfasst, die die Filterkartusche (15) umgibt, wobei die Erweiterung eine oder mehrere Perforation(en) (12) umfasst, die die Verengung (4) bildet/bilden.

5. Verfahren zur Überwachung des Verstopfungszustands einer Filtrationsvorrichtung (1) nach Anspruch 3, wobei die Filtrationsvorrichtung (1) einen zentralen Fluidzirkulationskanal (430) umfasst, der von der ersten Filtrationszone (2) und von der zweiten Filtrationszone (3) umgeben ist, und wobei das Gehäuse (16) eine Erweiterung umfasst, die sich im Inneren des zentralen Fluidzirkulationskanals (430) erstreckt, wobei die Erweiterung eine oder mehrere Perforation(en) (12) umfasst, die die Verengung (4) bildet/bilden.

6. Verfahren zur Überwachung des Verstopfungszustands einer Filtrationsvorrichtung (1) nach einem der Ansprüche 4 und 5, wobei ein Verhältnis zwischen einem Bereich eines Querschnitts der Perforation (12) oder einer Summe der Bereiche der Querschnitte der Perforationen (12) und einem Gesamtbereich einer Fläche (443) der Erweiterung kleiner als 50%, vorzugsweise kleiner als 25% ist.

7. Verfahren zur Überwachung des Verstopfungszustands einer Filtrationsvorrichtung (1) nach einem der Ansprüche 1 und 2, wobei:

- die erste Filtrationszone (2) ein erstes Filtrationsmedium (201) umfasst,
- die zweite Filtrationszone (3) ein zweites Filtrationsmedium (301) umfasst,

wobei die Filtrationsvorrichtung (1) ferner einen Zwischenflansch (44) umfasst, der zwischen dem ersten Filtrationsmedium (201) und dem zweiten Filtrationsmedium (301) angeordnet ist, wobei der Zwischenflansch (44) umfasst:

- eine erste Fläche, die einen ersten Abschnitt (441) im Kontakt mit dem ersten Filtrationsmedium (201) aufweist,
- eine zweite Fläche gegenüber der ersten Fläche, die einen zweiten Abschnitt (442) im Kontakt mit dem zweiten Filtrationsmedium (301) aufweist,

wobei eine von der ersten Fläche oder von der zweiten Fläche einen dritten Abschnitt (443) aufweist, der weder mit dem ersten Filtrationsmedium (201) im Kontakt ist noch mit dem zweiten Filtrationsmedium (301) im Kontakt ist,

- eine oder mehrere Perforation(en) (12), die die Verengung (4) bildet/bilden,

und wobei ein Verhältnis zwischen einem Bereich eines Querschnitts der Perforation (12) oder einer Summe der Bereiche der Querschnitte der Perforationen (12) und einem Bereich des dritten Abschnitts (443) kleiner als 50%, vorzugsweise kleiner als 25% ist.

8. Verfahren zur Überwachung des Verstopfungszustands einer Filtrationsvorrichtung (1) nach einem der Ansprüche 2 bis 7, wobei das Gehäuse (16) eine Seitenwand (160) umfasst, die die Filterkartusche (15) umgibt, wobei die Seitenwand (160) eine allgemeine Rotationsform, beispielsweise eine zylindrische Rotationsform oder eine konische Rotationsform, aufweist.

9. Verfahren zur Überwachung des Verstopfungszustands einer Filtrationsvorrichtung (1) nach einem der Ansprüche 2 bis 8, wobei das Gehäuse (16) einen Gehäusekopf (171) umfasst, der imstande ist, mit der Filterkartusche (15) zusammengesetzt zu sein und Verbindungsdüsen (172) aufweist, um den Fluideinlass (20) und den Fluidauslass (21) mit Fluidzirkulationsleitungen zu verbinden.

10. Verfahren zur Überwachung des Verstopfungszustands einer Filtrationsvorrichtung (1) nach einem der Ansprüche 1 bis 9, wobei die Verengung (4) nach der zweiten Filtrationszone (3) in Fließrichtung (17) des Fluids im zweiten Fluidströmungsweg (32) angeordnet ist.

11. Verfahren zur Überwachung des Verstopfungszustands einer Filtrationsvorrichtung (1) nach einem der Ansprüche 1 bis 9, wobei die Verengung (4) vor der zweiten Filtrationszone (3) in Fließrichtung (17) des Fluids im zweiten Fluidströmungsweg (32) angeordnet ist.

12. Verfahren zur Überwachung des Verstopfungszustands einer Filtrationsvorrichtung (1) nach einem der Ansprüche 1 bis 11, wobei das Verhältnis zwischen der ersten Filtrationsoberfläche ($S_1$) und der Summe der ersten und zweiten Filtrationsoberflächen ($S_T$) zwischen 0,3 und 0,7, vorzugsweise zwischen 0,4 und 0,6, beispielsweise bei 0,5 liegt.

13. Verfahren zur Überwachung des Verstopfungszustands einer Filtrationsvorrichtung (1) nach Anspruch 1, wobei die Filtrationsvorrichtung (1) umfasst:

    - eine erste austauschbare Filterkartusche ($15_1$), die die erste Filtrationszone (2) umfasst,
    - eine zweite austauschbare Filterkartusche ($15_2$), die die zweite Filtrationszone (3) umfasst, und
    - einen zweiten Verbindungskanal (18), der die erste Filterkartusche ($15_1$) und die zweite Filterkartusche ($15_2$) verbindet, wobei der zweite Verbindungskanal (18) die Verengung (4) bildet.

14. Verfahren zur Überwachung des Verstopfungszustands einer Filtrationsvorrichtung (1) nach einem der Ansprüche 1 bis 13, wobei die Filtrationseffizienzen ($E_1$, $E_2$) zwischen 95% und 100%, vorzugsweise zwischen 98% und 99,9%, beispielsweise bei 99,5%, für die gegebene Partikelgröße (P) liegen.

15. Verfahren zur Überwachung des Verstopfungszustands einer Filtrationsvorrichtung (1) nach einem der Ansprüche 1 bis 14, wobei die gegebene Partikelgröße (P) zwischen 2 und 25 Mikron liegt.

16. Verfahren zur Überwachung des Verstopfungszustands einer Filtrationsvorrichtung (1) nach einem der Ansprüche 1 bis 15, wobei die gegebene Partikelgröße (P) zwischen 8 und 50 Mikron liegt.

17. Verfahren zur Überwachung des Verstopfungszustands einer Filtrationsvorrichtung (1) nach einem der Ansprüche 1 bis 16, das ferner einen vorherigen Schritt umfasst, der darin besteht, die charakteristische Kurve zu bestimmen, indem eine Referenzfiltrationsvorrichtung (1) einer Zirkulation eines Fluids ausgesetzt wird, das Partikel mit einer vorher festgelegten Zusammensetzung, vorher festgelegten Merkmalen und einem vorher festgelegten Konzentrationsgrad bei einer vorher festgelegten Temperatur und einem vorher festgelegten Durchsatz enthält und durch Messen einer Entwicklung der Druckdifferenz zwischen dem Fluideinlass (20) und dem Fluidauslass (21) im Laufe der Zeit.

18. Filtrationssystem für die Filtration eines Fluids, das eine Partikelfiltrationsvorrichtung (1) für die Filtration eines Fluids umfasst, wobei die Filtrationsvorrichtung (1) umfasst:

    - einen Fluideinlass (20),
    - einen Fluidauslass (21),
    - einen ersten Fluidströmungsweg (31), der den Fluideinlass (20) mit dem Fluidauslass (21) verbindet und eine erste Filtrationszone (2) umfasst, die eine erste Filtrationsoberfläche ($S_1$) und eine erste Filtrationseffizienz ($E_1$) für eine gegebene Partikelgröße (P) aufweist, und
    - einen zweiten Fluidströmungsweg (32), der den Fluideinlass (20) mit dem Fluidauslass (21) verbindet und umfasst:

        o eine zweite Filtrationszone (3), die eine zweite Filtrationsoberfläche ($S_2$) und eine zweite Filtrationseffizienz ($E_2$), die mit der ersten Filtrationseffizienz (2) identisch ist, für die gegebene Partikelgröße (P) aufweist, und
        o eine Verengung (4), die einen konstanten hydraulischen Widerstand aufweist, so dass im Betrieb ein erster Teil des Fluids durch den ersten Strömungsweg (31) fließt und dabei die erste Filtrationszone (2) durchquert und ein zweiter Teil des Fluids durch den zweiten Strömungsweg (32) fließt und dabei die zweite Filtrationszone (3) und die Verengung (4) durchquert und die erste Filtrationszone (2) einen vorher festgelegten Verstopfungszustand vor der zweiten Filtrationszone (3) erreicht,

        **dadurch gekennzeichnet, dass** die erste Filtrationszone (2) ein erstes Filtrationsverhältnis ($R_1$) aufweist und die zweite Filtrationszone (3) ein zweites Filtrationsverhältnis ($R_2$) aufweist, wobei das erste Filtrationsverhältnis ($R_1$) mit dem zweiten Filtrationsverhältnis ($R_2$) identisch ist, wobei sich das Filtrationsverhältnis einer Filtrationszone (23) im Betrieb als das Verhältnis zwischen der Anzahl von Partikeln gegebener Größe (P), ermittelt vor der Filtrationszone (23), und der Anzahl von Partikeln gleicher gegebener Größe (P), ermittelt nach der Filtrationszone (23), definiert,
wobei das Filtrationssystem ferner ein Überwachungsmodul des Verstopfungszustands der Filtrationsvorrichtung (1) umfasst, wobei das Überwachungsmodul dazu ausgelegt ist, Signale zu empfangen, die für eine Druckdifferenz zwischen dem Fluideinlass (20) und dem Fluidauslass (21), der Temperatur und des Fluiddurchsatzes am Fluideinlass (20) repräsentativ sind, und um einen Verstopfungszustand der Filtrationsvorrichtung (1) in Abhängigkeit von der Druckdifferenz zwischen dem Fluideinlass (20) und dem Fluidauslass (21), der Temperatur und dem Fluiddurchsatz am Fluideinlass (20) zu bestimmen, wobei die Bestimmung eines Verstopfungszustands der Filtrationsvorrichtung (1) durch Vergleichen mit einer charakteristischen Referenzkurve durchgeführt wird, die einen Verstopfungszustand in Abhängigkeit von der Druckdifferenz definiert.

## Claims

1. A method of monitoring the clogging condition of a particulate filtration device (1) for filtration of a fluid, the filtration device (1) comprising:

   - a fluid inlet (20),
   - a fluid outlet (21),
   - a first fluid flow circuit (31) connecting the fluid inlet (20) to the fluid outlet (21) and comprising a first filtration area (2) having a first filtration surface ($S_1$) and a first filtration efficiency ($E_1$) for a given particle size (P), and
   - a second fluid flow circuit (32) connecting the fluid inlet (20) to the fluid outlet (21), and comprising :

      o a second filtration area (3) with a second filtration surface ($S_2$) and a second filtration efficiency ($E_2$), identical to the first filtration efficiency (2), for the given particle size (P), and
      o a restriction (4) having a constant hydraulic resistance, so that in operation a first part of the fluid flows through the first flow path (31) through the first filter zone (2) and a second part of the fluid flows through the second flow path (32) through the second filter zone (3) and the restriction (4), and the first filter zone (2) reaches a predetermined clogging state before the second filter zone (3),

wherein the first filter zone (2) has a first filter ratio ($R_1$) and the second filter zone (3) has a second filter ratio ($R_2$), the first filter ratio ($R_1$) being identical to the second filter ratio ($R_2$), wherein the filtration ratio of a filtration zone (23) is defined, in operation, as the ratio between the number of particles, of given size (P), counted upstream of the filtration zone (23), and the number of particles, of the same given size (P), counted downstream of said filtration zone (23), the method comprising the steps of:

   - measure a pressure difference between the fluid inlet (20) and the fluid outlet (21),
   - measure a fluid temperature and a fluid flow rate at the fluid inlet (20), and

determining a clogging condition from the measured pressure difference, fluid temperature and fluid flow rate, and a reference characteristic curve defining a clogging condition as a function of pressure difference.

2. A method of monitoring the clogging condition of a filtration device (1) according to claim 1, wherein the filtration device (1) comprises a replaceable filter cartridge (15) comprising the first filtration zone (2) and the second filtration zone (3), and a housing (16) adapted to contain the filter cartridge (15) and delimiting with the filter cartridge (15) the first fluid flow circuit (31) and the second fluid flow circuit (32).

3. A method for monitoring the clogging condition of a filtration device (1) according to claim 2, wherein the housing (16) comprises the restriction (4).

4. A method of monitoring the clogging condition of a filtration device (1) according to claim 3, wherein the housing (16) comprises an extension surrounding the filter cartridge (15), the extension comprising one or more perforations (12) forming the restriction (4).

5. A method of monitoring the clogging condition of a filtration device (1) according to claim 3, wherein the filtration device (1) comprises a central fluid flow channel (430) surrounded by the first filtration zone (2) and by the second filtration zone (3), and wherein the housing (16) comprises an extension extending within the central fluid flow channel (430), the extension comprising one or more perforations (12) forming the restriction (4).

6. A method of monitoring the clogging condition of a filter device (1) according to any of claims 4 and 5, wherein a ratio of a sectional area of the perforation (12) or a sum of the sectional areas of the perforations (12), to a total area of a face (443) of the extension, is less than 50%, preferably less than 25%.

7. A method for monitoring the clogging condition of a filtration device (1) according to any of claims 1 and 2, wherein:

> - the first filtration zone (2) comprises a first filtration media (201),
> - the second filtration zone (3) comprises a second filtration media (301),
> the filtration device (1) further comprising an intermediate flange (44) disposed between the first filtration media (201) and the second filtration media (301), the intermediate flange (44) comprising :
>
> > - a first face having a first portion (441) in contact with the first filtration media (201),
> > - a second face, opposite the first face, and having a second portion (442), in contact with the second filtration media (301), one of the first face or the second face having a third portion (443) that is neither in contact with the first filtration media (201) nor in contact with the second filtration media (301),
> > - one or more perforations (12) forming the restriction (4),
>
> and wherein a ratio of a sectional area of the perforation (12) or a sum of the sectional areas of the perforations (12), to an area of the third portion (443), is less than 50%, preferably less than 25%.

8. A method of monitoring the clogging condition of a filtration device (1) according to any of claims 2 to 7, wherein the housing (16) comprises a side wall (160) surrounding the filter cartridge (15), the side wall (160) having a generally rotational shape, for example rotational cylindrical or rotational conical.

9. A method of monitoring the clogging condition of a filtration device (1) according to any of claims 2 to 8, wherein the housing (16) comprises a housing head (171) adapted to be assembled with the filter cartridge (15) and having connecting nozzles (172) for connecting the fluid inlet (20) and the fluid outlet (21) to fluid flow lines.

10. A method of monitoring the clogging condition of a filtration device (1) according to any of claims 1 to 9, wherein the restriction (4) is arranged downstream of the second filtration zone (3) in the direction of flow (17) of the fluid in the second fluid flow circuit (32).

11. A method for monitoring the clogging condition of a filtration device (1) according to any of claims 1 to 9, wherein the restriction (4) is arranged upstream of the second filtration zone (3) in the direction of flow (17) of the fluid in the second fluid flow circuit (32).

12. A method for monitoring the clogging condition of a filtration device (1) according to any of claims 1 to 11, wherein the ratio of the first filtration area ($S_1$) to the sum of the first and second filtration areas ($S_T$) is between 0.3 and 0.7, preferably between 0.4 and 0.6, for example 0.5.

13. A method for monitoring the clogging condition of a filtration device (1) according to claim 1, wherein the filtration device (1) comprises:

> - a first replaceable filter cartridge ($15_1$) comprising the first filtration zone (2),
> - a second replaceable filter cartridge ($15_2$) comprising the second filtration zone (3), and
> - a second connecting channel (18) connecting the first filter cartridge ($15_1$) and the second filter cartridge ($15_2$), the second connecting channel (18) forming the restriction (4).

14. A method for monitoring the clogging condition of a filtration device (1) according to any of claims 1 to 13, wherein the filtration efficiencies ($E_1$, $E_2$) are between 95% and 100%, preferably between 98% and 99.9%, for example 99.5%, for the given particle size (P).

15. A method for monitoring the clogging condition of a filtration device (1) according to any of claims 1 to 14, wherein the given particle size (P) is between 2 and 25 microns.

16. A method of monitoring the clogging condition of a filtration device (1) according to any of claims 1 to 15, wherein the given particle size (P) is between 8 and 50 microns.

17. A method of monitoring the clogging state of a filtration device (1) according to any one of claims 1 to 16, further comprising a preliminary step of determining the characteristic curve by subjecting a reference filtration device (1) to a flow of a fluid containing particles with a predetermined composition, predetermined characteristics, and predetermined concentration ratio, at a predetermined temperature and a predetermined flow rate, and measuring a change in pressure difference between the fluid inlet (20) and the fluid outlet (21) over time.

18. A filtration system for the filtration of a fluid, comprising a particulate filtration device (1) for the filtration of a fluid, the filtration device (1) comprising:

- a fluid inlet (20),
- a fluid outlet (21),
- a first fluid flow circuit (31) connecting the fluid inlet (20) to the fluid outlet (21) and comprising a first filtration area (2) having a first filtration surface ($S_1$) and a first filtration efficiency ($E_1$) for a given particle size (P), and
- a second fluid flow circuit (32) connecting the fluid inlet (20) to the fluid outlet (21), and comprising :

> o a second filtration area (3) with a second filtration surface ($S_2$) and a second filtration efficiency ($E_2$), identical to the first filtration efficiency (2), for the given particle size (P), and
> o a restriction (4) having a constant hydraulic resistance, so that in operation, a first part of the fluid flows through the first flow path (31) through the first filter zone (2) and a second part of the fluid flows through the second flow path (32) through the second filter zone (3) and the restriction (4), and the first filter zone (2) reaches a predetermined clogging state before the second filter zone (3),

**characterized in that** the first filtration zone (2) has a first filtration ratio ($R_1$) and the second filtration zone (3) has a second filtration ratio ($R_2$), the first filtration ratio ($R_1$) being identical to the second filtration ratio ($R_2$) wherein the filtration ratio of a filtration zone (23) is defined, in operation, as the ratio between the number of particles, of given size (P), counted upstream of the filtration zone (23), and the number of particles, of the same given size (P), counted downstream of said filtration zone (23), the filtration system further comprising a module for monitoring the clogging condition of the filtration device (1), the monitoring module being configured to receive signals representative of a pressure difference between the fluid inlet (20) and the fluid outlet (21), the temperature and the fluid flow rate at the fluid inlet (20) and to determine a clogging condition of the filtration device (1) as a function of the pressure difference between the fluid inlet (20) and the fluid outlet (21), the temperature and the fluid flow rate at the fluid inlet (20), the determination of a clogging condition of the filtration device (1) being performed by comparison with a reference characteristic curve defining a clogging condition as a function of the pressure difference.

## FIG. 1
## Art antérieur

## FIG. 2

## FIG. 3

FIG. 4a

FIG. 4b

EP 3 513 858 B1

FIG. 4c

FIG. 4d

## FIG. 5

EP 3 513 858 B1

FIG. 6

Courbe de colmatage d'un dispositif de filtration présentant une restriction
Courbe de colmatage d'un dispositif de filtration conforme à l'art antérieur

EP 3 513 858 B1

FIG. 7

**RÉFÉRENCES CITÉES DANS LA DESCRIPTION**

**Documents brevets cités dans la description**

- US 4422790 A
- FR 2975015 A1
- US 2003106847 A1
- WO 0207856 A1
- WO 2016010973 A1